(19) Europäisches Patentamt / European Patent Office / Office européen des brevets

(11) **EP 3 392 577 A1**

(12) **EUROPEAN PATENT APPLICATION**
published in accordance with Art. 153(4) EPC

(43) Date of publication:
24.10.2018 Bulletin 2018/43

(51) Int Cl.:
*F25B 1/00* (2006.01)  *F25B 1/10* (2006.01)

(21) Application number: 17774893.6

(22) Date of filing: 27.03.2017

(86) International application number:
PCT/JP2017/012307

(87) International publication number:
WO 2017/170356 (05.10.2017 Gazette 2017/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 28.03.2016 JP 2016064534

(71) Applicant: **Mitsubishi Heavy Industries Thermal Systems, Ltd.**
**Tokyo 108-8215 (JP)**

(72) Inventors:
• **MAENO Masashi**
  **Tokyo 108-8215 (JP)**
• **YOSHIDA Shigeru**
  **Tokyo 108-8215 (JP)**

(74) Representative: **Cabinet Beau de Loménie**
**158, rue de l'Université**
**75340 Paris Cedex 07 (FR)**

(54) **MULTISTAGE COMPRESSION DEVICE, REFRIGERATION CYCLE COMPRISING SAME, AND OPERATION METHOD FOR MULTISTAGE COMPRESSION DEVICE**

(57)　A multistage compression device (20) comprising: a plurality of compressors (21A, 21C) arranged in series in a refrigerant circulation line (10); rotational frequency modifiers (29A, 29C), provided to each of the plurality of compressors (21A, 21C); and a control device (100). In order that the outflow oil amount of a downstream-side compressor is less than the outflow oil amount of an upstream-side compressor, the control device (100) comprises a rotational frequency setting unit (102) for setting the rotational frequency of each of the compressors (21A, 21C), and a rotational speed instruction unit (105) for instructing the corresponding rotational frequency modifier of the rotational frequency of the respective compressors as set by the rotational frequency setting unit (102).

FIG. 1

EP 3 392 577 A1

## Description

Technical Field

The present invention relates to a multistage compression device, a refrigeration cycle comprising the same, and an operation method for a multistage compression device.

Priority is claimed on Japanese Patent Application No. 2016-064534, filed March 28, 2016, the content of which is incorporated herein by reference.

Background Art

In refrigeration cycles, a compression device is arranged in a circulation line through which a refrigerant circulates. As this compression device, for example, there is a multistage compression device in which a plurality of compressors are arranged in series in the circulation line.

As such a multistage compression device, for example, there is a device described in the following PTL 1. The compressors in this multistage compression device have a compression part that compresses a refrigerant, and a housing that covers the compression part and reserves lubricating oil. The lubricating oil within the housing is ejected together with the refrigerant from the housing as the compression part is driven. Thus, in this multistage compression device, an oil separator is provided on an ejection side of each compressor, and the lubricating oil reserved on the oil separator is returned into the housing of the compressor. Moreover, in this multistage compression device, an oil reservoir within a housing in a downstream high-pressure stage compressor and an oil reservoir within a housing in an upstream low-pressure stage compressor are connected to each other by an oil equalization line. The lubricating oil, which is ejected from the upstream low-pressure stage compressor and is not trapped by the oil separator of this low-pressure stage compressor, flows into the downstream high-pressure stage compressor, and a portion thereof is reserved in the oil reservoir of the high-pressure stage compressor. The internal pressure of the housing of the high-pressure stage compressor is higher than the internal pressure of the housing of the low-pressure stage compressor. For this reason, a portion of the lubricating oil reserved in the oil reservoir of this high-pressure stage compressor returns to the oil reservoir of the low-pressure stage compressor via the oil equalization line.

In this multistage compression device, insufficient lubricating oil in each compressor is solved by achieving the equalization between the amount of the lubricating oil within the high-pressure stage compressor and the amount of the lubricating oil within the low-pressure stage compressor.

Citation List

Patent Literature

[PTL 1] Japanese Unexamined Patent Application Publication No. 2013-024447

Summary of Invention

Technical Problem

As in the technique described in the above PTL 1, even if the oil separator is provided, the lubricating oil, which could not be trapped by this oil separator, is gradually diffused into the circulation line. For this reason, the total amount of the lubricating oil reserved in the low-pressure stage compressor and lubricating oil reserved in the high-pressure stage compressor decreases gradually. In this way, in a case where much of the lubricating oil is diffused in the circulation line, for example, an oil return operation in which the lubricating oil diffused in the circulation line returns to the compressor is performed.

Assuming that the amount of the lubricating oil of the downstream high-pressure stage compressor reaches a lower limit value in the technique described in the above PTL 1, it is assumed that the oil return operation is performed. In this case, the lubricating oil diffused in the circulation line returns to the upstream low-pressure stage compressor. The lubricating oil that has returned to the low-pressure stage compressor gradually flows out of this low-pressure stage compressor and reaches the high-pressure stage compressor through the oil separator. For this reason, in the technique described in the above PTL 1, in a case where the amount of the lubricating oil of the downstream high-pressure stage compressor reaches the lower limit value, there is a problem that the oil amount recovery of the lubricating oil of this high-pressure stage compressor takes substantial time.

Thus, an object of the invention is to provide a multistage compression device, a refrigeration cycle comprising the same, and an operation method for a multistage compression device capable of shortening oil amount recovery time.

Solution to Problem

A multistage compression device as one aspect related to the invention for solving the above problems includes a plurality of compressors arranged in series in a circulation line for a refrigerant; a rotational frequency changer that is provided in each of the plurality of compressors and changes a rotational frequency of the compressor; and a control device that controls the rotational frequencies of the plurality of compressors. Each of the plurality of compressors has a compression part that compresses the refrigerant and changes the rotational frequency with the rotational frequency changer, and a housing which covers the compression part and in which oil required for operation of the compression part is reserved. A suction port through which the refrigerant is suctioned, an ejection port through which the refrigerant compressed by the compression part is ejected together with the oil, and an oil reservoir in which the oil is reserved are formed in the housing. The control device has a storage unit in which a relationship between an operational state of a compressor including the rotational frequency of the compressor and an outflow oil amount per unit time of the oil is stored for each of the plurality of compressors, a rotational frequency setting unit that determines the rotational frequency of a compressor for each of the plurality of compressors such that the outflow oil amount of a downstream compressor becomes smaller than the outflow oil amount of an upstream compressor among the plurality of compressors, using the relationship for each of the plurality of compressors, and a rotational frequency instruction unit that instructs a corresponding rotational frequency changer on the rotational frequency of each of the plurality of compressors set by the rotational frequency setting unit.

In the multistage compression device, the individual compressors are operated such that the outflow oil amount of the downstream compressor decreases with respect to the outflow oil amount of the upstream compressor. For this reason, in the multistage compression device, a situation in which the oil amount of the downstream compressor has the lower limit value before the oil amount of the upstream compressor has the lower limit value can be prevented. In other words, in the multistage compression device, in a case where the oil amount of any of the compressors reaches the lower limit value, the compressor becomes the upstream compressor. Additionally, in the oil return operation, the oil diffused into the circulation line returns into the upstream compressor before returning into the downstream compressor. Therefore, in the multistage compression device, even if the oil amount of any of the compressors reaches the lower limit value, the oil amount of the compressor of which the oil amount reaches the lower limit value can be recovered in a short time by oil return operation.

Here, in the above multistage compression device, each of the plurality of compressors may include a superheat degree acquiring unit that acquires a superheat degree of the oil reserved in the oil reservoir, the outflow oil amount in the relationship may be an outflow oil amount corrected in accordance with the superheat degree of the oil, and the rotational frequency setting unit may determine the rotational frequency according to the superheat degree of each of the plurality of compressors such that the outflow oil amount of a downstream compressor becomes smaller than the outflow oil amount of an upstream compressor among the plurality of compressors, using the relationship for each of the plurality of compressors and the superheat degree acquired by the superheat degree acquiring unit.

The outflow oil amount from a compressor varies according to the superheat degree of the oil reserved within the compressor. For this reason, the outflow oil amount from each compressor can be accurately acquired by including the superheat degree of the oil as one parameter showing the operational state of the compressor.

Additionally, the multistage compression device of any of the above may further include an oil separator that is provided for each of the plurality of compressors and separates the oil from the refrigerant ejected from the compressor before the refrigerant ejected from the compressor flows into other compressors, and an oil return line that returns the oil separated by the oil separator into the housing of the compressor corresponding to the oil separator.

In the multistage compression device, a portion of the oil ejected together with the refrigerant from a compressor can be returned to the compressor via the oil separator. Thus, a decrease in oil amount of the compressor can be suppressed.

In the multistage compression device including the oil separator, an oil separation efficiency of the oil separator for the downstream compressor may be higher than the oil separation efficiency of the oil separator for the upstream compressor among the oil separators for the plurality of compressors, and the outflow oil amount in the relationship may be an outflow oil amount corrected in accordance with the oil separation efficiency of the oil separator.

In the multistage compression device, the oil separation efficiency of the oil separator for the lowermost stream compressor is higher than the oil separation efficiencies of the oil separators for other compressors. For this reason, in the multistage compression device, the amount of the oil that flows out from a portion in the circulation line, through which the refrigerant for the multistage compression device flows, to the remaining portions in the circulation line can be effectively suppressed. Additionally, in the multistage compression device concerned, the outflow oil amount from each compressor can be accurately acquired by taking into consideration the oil separation efficiency of the oil separator.

Additionally, the multistage compression device of any of the above may further include an oil equalization line having a first end connected to the oil reservoir for each of all compressors excluding an uppermost stream compressor among the plurality of compressors and having a second end connected to the oil reservoir of a compressor adjacent to an upstream side of the compressor serving as a connection source of the first end.

In the multistage compression device, the individual compressors are operated such that the outflow oil amount of the downstream compressor decreases with respect to the outflow oil amount of the upstream compressor. For this reason, the oil amount within the upstream compressor out of the two compressors adjacent to each other decreases with the lapse of time, and the oil amount within the downstream compressor increases the lapse of time. In the multistage compression device, since the oil reservoir of the downstream compressor and the oil reservoir of the upstream compressor are connected to each other by the oil equalization line, the oil reserved within the downstream high-pressure compressor can be sent into the upstream low-pressure compressor via the oil equalization line. For this reason, in the multistage compression device, a decrease in the oil amount within the upstream compressor can be suppressed.

The multistage compression device including the oil equalization line may further include an oil equalization valve that is provided in the oil equalization line and adjusts a flow rate of the oil that flows through the oil equalization line.

In a state where the oil reservoir of the downstream compressor and the oil reservoir of the upstream stage compressor are always communicating with each other by the oil equalization line, the pressure within the downstream compressor always declines, and the compression efficiency in the downstream high-pressure compressor always declines. In the multistage compression device, by opening the oil equalization valve only when the need for feeding the oil, which is reserved within the downstream compressor, into the upstream compressor increases, the oil amount within the upstream compressor can be recovered, and a decline in the compression efficiency in the downstream compressor can be made temporary.

In the multistage compression device including the oil equalization valve, the control device may have an oil amount acquiring unit that acquires amounts of the oil reserved in the oil reservoirs for all compressors excluding the uppermost stream compressor, and an oil equalization valve instruction unit that gives an opening instruction to a target oil equalization valve provided in the oil equalization line that connects the oil reservoir of the target compressor and the oil reservoir of a compressor adjacent to an upstream side of the target compressor to each other if an oil amount in the oil reservoir of a target compressor that is any compressor, among oil amounts of one or more compressors acquired in the oil amount acquiring unit, reaches a predetermined upper limit value.

In the multistage compression device, the oil amount within the upstream compressor can be received at a suitable timing at which the oil amount within the upstream compressor decreases.

In the multistage compression device including the oil amount acquiring unit, the oil amount acquiring unit may have an oil amount estimation unit that finds an outflow oil amount per unit time of the downstream compressor according to the operational state of the downstream compressor, using the relationship relating to the downstream compressor, out of a pair of the compressors adjacent to each other, finds an outflow oil amount per unit time of the upstream compressor according to the operational state of the upstream compressor, using the relationship relating to the upstream compressor, and estimates an amount of the oil reserved within the downstream compressor, on the basis of a value obtained by subtracting the outflow oil amount per unit time of the upstream compressor from the outflow oil amount per unit time of the downstream compressor.

In the multistage compression device, the amount of the oil reserved within a compressor can be acquired without using a liquid level meter or the like.

In the multistage compression device including the oil equalization valve instruction unit, the oil equalization valve instruction unit may give the opening instruction to the target oil equalization valve for a predetermined time, the predetermined time may be a time until a total oil amount based on an oil amount per unit time of the oil flowing into a compressor adjacent to an upstream side of the target compressor from the inside of the target compressor reaches a predetermined oil amount, and the oil amount per the unit time may be an oil amount that is determined according to a difference between a pressure within a housing of the target compressor and a pressure within a housing of the compressor adjacent to the upstream side of the target compressor.

In the multistage compression device, a suitable amount of oil in the oil reserved within the downstream compressor can be sent into the upstream compressor.

In the multistage compression device of any of the above, the control device may have an uppermost stream oil amount acquiring unit that acquires an amount of the oil reserved within an uppermost stream compressor among a plurality of the compressors, and an oil return operation instruction unit that instructs any device connected to the circulation line to be a state that the oil in the circulation line is capable of returning into the uppermost stream compressor if an oil amount acquired by the uppermost stream oil amount acquiring unit reaches a predetermined lower limit value.

In the multistage compression device, if the oil return operation instruction unit instructs the device connected to the circulation line, the oil diffused into the circulation line can be returned into the uppermost stream compressor.

A refrigeration cycle as one aspect related to the invention for solving the above problems includes the multistage compression device of any of the above; a first heat exchanger that is arranged in the circulation line and allows heat exchange between the refrigerant flowing through the circulation line and a first medium to change the phase of the refrigerant; a second heat exchanger that is arranged in the circulation line, allows heat exchange between the refrigerant flowing through the circulation line and a second medium to change the phase of the refrigerant; and an expansion valve that is arranged at a portion in the circulation line where the multistage compression device is not arranged between the first heat exchanger and the second heat exchanger, in the circulation line between the first heat exchanger and the second heat exchanger.

An operation method for a multistage compression device as one aspect related to the invention for solving the above problems is an operation method for a multistage compression device as follows.

The multistage compression device includes a plurality of compressors arranged in series in a circulation line for a refrigerant, and a rotational frequency changer that is provided in each of the plurality of compressors and changes a rotational frequency of the compressor. Each of the plurality of compressors has a compression part that compresses the refrigerant and changes the rotational frequency with the rotational frequency changer, and a housing which covers the compression part and in which oil required for driving of the compression part is reserved. A suction port through which the refrigerant is suctioned, an ejection port through which the refrigerant compressed by the compression part is ejected together with the oil, and an oil reservoir in which the oil is reserved are formed in the housing. The operation method for a multistage compression device includes a rotational frequency setting step of determining the rotational frequency of a compressor for each of the plurality of compressors such that an outflow oil amount of a downstream compressor becomes smaller than the outflow oil amount of an upstream compressor among the plurality of compressors, using a predetermined relationship between an operational state of a compressor including the rotational frequency of the compressor and an outflow oil amount per unit time in each of the plurality of compressors, and a rotational frequency instruction step of instructing a rotational frequency changer corresponding to the compressor on the rotational frequency of each of the plurality of compressors set by the rotational frequency setting step.

Here, the operation method for a multistage compression device may execute an oil amount acquiring step of acquiring amounts of the oil reserved in the oil reservoirs for all the compressors excluding the uppermost stream compressor among the plurality of compressors; and an oil equalization amount processing step of sending a portion of the oil within a target compressor into the compressor adjacent to the upstream side of the target compressor if an oil amount within the target compressor, which is any one compressor among oil amounts within the compressors acquired in the oil amount acquiring step, reaches a predetermined upper limit value.

The operation method for a multistage compression device of any of the above may further execute an uppermost stream oil amount acquiring step of acquiring an amount of the oil reserved within the oil reservoir of the uppermost stream compressor among the plurality of the compressors, and an oil return processing step of instructing any device connected to the circulation line such that the oil in the circulation line is capable of returning into the uppermost stream compressor if an oil amount acquired in the uppermost stream oil amount acquiring step reaches a predetermined lower limit value. Advantageous Effects of Invention

In the aspect of the invention, the time for recovering the oil amount of a compressor can be shortened.

Brief Description of Drawings

Fig. 1 is a system diagram of a refrigeration cycle in an embodiment related to the invention.

Fig. 2 is a functional block diagram of a control device in the embodiment related to the invention.

Fig. 3 is an illustrative view for illustrating relationship information in the embodiment related to the invention.

Fig. 4 is a graph illustrating a relationship between superheat degree and ejection oil amount of an oil reservoir.

Fig. 5 is a flowchart illustrating the operation of the control device in the embodiment related to the invention.

Fig. 6 is an illustrative view illustrating oil amount changes within a high-pressure stage compressor and oil amount changes of a low-pressure stage compressor in the embodiment related to the invention.

Fig. 7 is a system diagram of the multistage compression device in a modification example of the embodiment related to the invention.

Description of Embodiments

Hereinafter, embodiments and modification examples related to the invention will be described in detail with reference to the drawings.

[Embodiment]

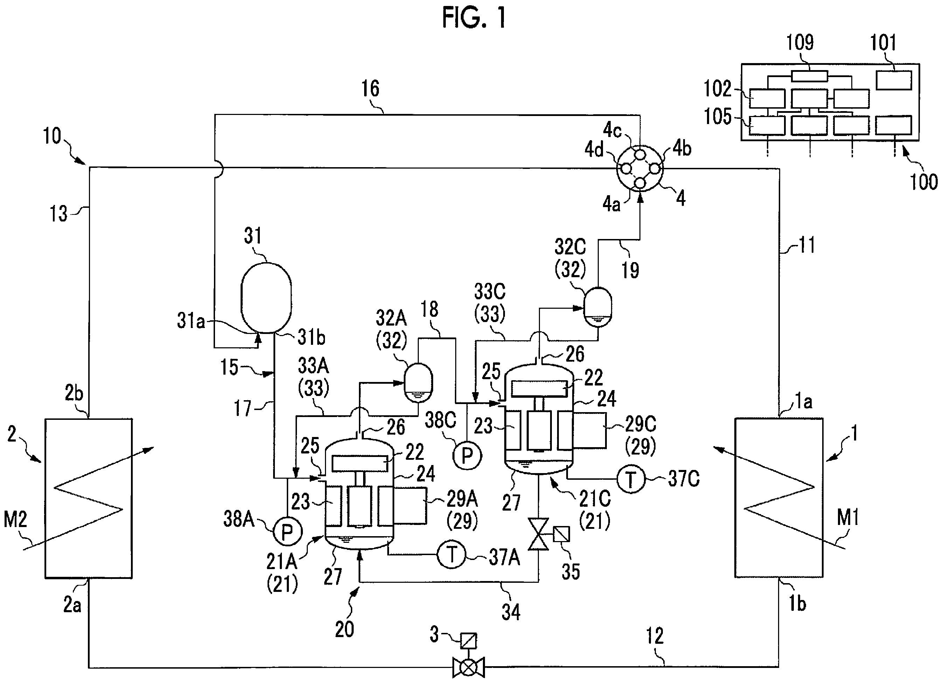

An embodiment of a refrigeration cycle related to the invention will be described with reference to Figs. 1 to 6.

As illustrated in Fig. 1, the refrigeration cycle of the present embodiment includes a first heat exchanger 1, a second heat exchanger 2, an expansion valve 3, a four-way switching valve 4, a circulation line 10, a multistage compression device 20, and a control device 100.

The first heat exchanger 1, the second heat exchanger 2, the expansion valve 3, the four-way switching valve 4, and the multistage compression device 20 are all provided in the circulation line 10 through which a refrigerant R flows. The first heat exchanger 1 exchanges heat between the refrigerant R and a first medium M1 to change the phase of the refrigerant R. The second heat exchanger 2 exchanges heat between the refrigerant R and a second medium M2 to change the phase of the refrigerant R. The first heat exchanger 1 has a first refrigerant port 1a and a second refrigerant port 1b. Additionally, the second heat exchanger 2 also has a first refrigerant port 2a and a second refrigerant port 2b. The multistage compression device 20 compresses a gaseous refrigerant R. The expansion valve 3 reduces the pressure of a liquid refrigerant R. The four-way switching valve 4 has four ports, and is capable of selectively changing the flow of the refrigerant R between the individual ports. The four-way switching valve 4 selectively takes a first connection form and a second connection form, thereby changing the flow of the refrigerant R between the individual ports. The first connection form is a form in which a first port 4a and a second port 4b are connected to each other and a third port 4c and a fourth port 4d are connected to each other. Additionally, the second connection form is a form in which the second port 4b and the third port 4c are connected to each other and the fourth port 4d and the first port 4a are connected to each other.

The circulation line 10 has a compression line 15 constituting a portion of the multistage compression device 20, a first line 11 connected to the first refrigerant port 1a of the first heat exchanger 1, a second line 12 connected to the first refrigerant port 2a of the second heat exchanger 2, and a third line 13 connected to the second refrigerant port 2b of the second heat exchanger 2. A low-pressure end, in other words, an upstream end of the compression line 15 is connected to the third port 4c of the four-way switching valve 4. A high-pressure end, in other words, a downstream end of the compression line 15 is connected to the first port 4a of the four-way switching valve 4. One end out of two ends of the first line 11 is connected to the second port 4b of the four-way switching valve 4, and the other end thereof is connected to the first refrigerant port 1a of the first heat exchanger 1 as mentioned above. One end out of two ends of the second line 12 is connected to the second refrigerant port 1b of the first heat exchanger 1, and the other end thereof is connected to the first refrigerant port 2a of the second heat exchanger 2 as mentioned above. One end out of two ends of the third line 13 is connected to the second refrigerant port 2b of the second heat exchanger 2 as mentioned above, and the other end thereof is connected to the fourth port 4d of the four-way switching valve 4.

The second refrigerant port 1b of the first heat exchanger 1 and the first refrigerant port 2a of the second heat exchanger 2 are connected to each other by the second line 12 as mentioned above. Additionally, the second refrigerant port 2b of the second heat exchanger 2 and the first refrigerant port 1a of the first heat exchanger 1 are connected to each other by the third line 13, the compression line 15, and the first line 11. The expansion valve 3 is arranged in the second line 12. Therefore, this expansion valve 3 is arranged in the circulation line 10 between the first heat exchanger 1 and the second heat exchanger 2 and in the circulation line 10 where the multistage compression device 20 is not arranged between the first heat exchanger 1 and the second heat exchanger 2.

The multistage compression device 20 includes an accumulator 31, a low-pressure stage compressor 21A, a high-pressure stage compressor 21C, a low-pressure-side rotational frequency changer 29A, a high-pressure-side rotational frequency changer 29C, a low-pressure oil separator 32A, a high-pressure oil separator 32C, the aforementioned compression line 15, a low-pressure oil return line 33A, a high-pressure oil return line 33C, an oil equalization line 34, and an oil equalization valve 35.

The accumulator 31 temporarily reserves the refrigerant R and has a function of separating a liquid-phase refrigerant R and a gas-phase refrigerant R from each other. A refrigerant inlet 31a and a refrigerant outlet 31b are formed in the accumulator 31.

Both of the low-pressure stage compressor 21A and the high-pressure stage compressor 21C have a compression part 22 that compresses the refrigerant R, a motor 23 that rotates the compression part 22, and a housing 24 that covers these. The compression part 22 is of, for example, a rotary type. The housing 24 has a trunk part that is cylindrical about a central axis extending in an upward-downward direction, and a mirror part that closes openings of both ends the cylindrical trunk part. A suction port 25 is formed in the trunk part of the housing 24, and an ejection port 26 is formed in the mirror part on the housing 24. A lower part within the housing 24 including the inside of a lower mirror part of the housing 24 constitutes an oil reservoir 27 (lower dome part) in which oil O required in order to actuate the motor 23 and the compression part 22 is reserved. The low-pressure-side rotational frequency changer 29A changes the rotational frequency of the motor 23 of the low-pressure stage compressor 21A. The high-pressure-side rotational frequency changer 29C changes the rotational frequency of the motor 23 of the high-pressure stage compressor 21C. Each of the rotational frequency changers 29A and 29C is, for example, an inverter that changes the frequency of AC power to be supplied to the motor 23.

The low-pressure oil separator 32A traps a portion of the oil O ejected together with the refrigerant R from the low-pressure stage compressor 21A. The high-pressure oil separator 32C traps a portion of the oil O ejected together with the refrigerant R from the high-pressure stage compressor 21C. That is, each of the oil separators 32A and 32C separates the oil O from a fluid ejected from the compressors 21A and 21C. The oil separation efficiency of the high-pressure oil separator 32C is higher than the oil separation efficiency of the low-pressure oil separator 32A.

The compression line 15 that constitutes a portion of the multistage compression device 20 has a first suction line 16, a second suction line 17, a low-pressure ejection line 18, and a high-pressure ejection line 19. One end out of two ends of the first suction line 16 is connected to the third port 4c of the four-way switching valve 4, and the other end thereof is connected to the refrigerant inlet 31a of the accumulator 31. One end out of two ends of the second suction line 17 is connected to the refrigerant outlet 31b of the accumulator 31, and the other end thereof is connected to the suction port 25 of the low-pressure stage compressor 21A. One end out of two ends of the low-pressure ejection line 18 is connected to the ejection port 26 of the low-pressure stage compressor 21A, and the other end thereof is connected to the suction port 25 of the high-pressure stage compressor 21C. One end out of two ends of the high-pressure ejection line 19 is connected to the ejection port 26 of the high-pressure stage compressor 21C, and the other end thereof is connected to the first port 4a of the four-way switching valve 4.

The low-pressure oil separator 32A is arranged in the low-pressure ejection line 18. The high-pressure oil separator 32C is arranged in the high-pressure ejection line 19. One end out of two ends of the low-pressure oil return line 33A is connected to the low-pressure oil separator 32A, and the other end thereof is connected to the second suction line 17. One end out of two ends of the high-pressure oil return line 33C is connected to the high-pressure oil separator 32C, and the other end thereof is connected to the low-pressure ejection line 18. One end out of two ends of the oil equalization line 34 is connected to the oil reservoir 27 of the high-pressure stage compressor 21C, and the other end thereof is connected to the oil reservoir 27 of the low-pressure stage compressor 21A. The oil equalization valve 35 is provided in the oil equalization line 34.

The multistage compression device 20 further includes a low-pressure-side thermometer 37A, a high-pressure-side thermometer 37C, a low-pressure-side pressure gauge 38A, and a high-pressure-side pressure gauge 38C. The low-pressure-side thermometer 37A detects the temperature of the oil O reserved in the oil reservoir 27 of the low-pressure stage compressor 21A. The high-pressure-side thermometer 37C detects the temperature of the oil O reserved in the oil reservoir 27 of the high-pressure stage compressor 21C. The low-pressure-side pressure gauge 38A detects the pressure of the refrigerant R suctioned by the low-pressure stage compressor 21A, that is, the pressure within the second suction line 17. The high-pressure-side pressure gauge 38C detects the pressure of the refrigerant R suctioned by the high-pressure stage compressor 21C, that is, the pressure within the low-pressure ejection line 18.

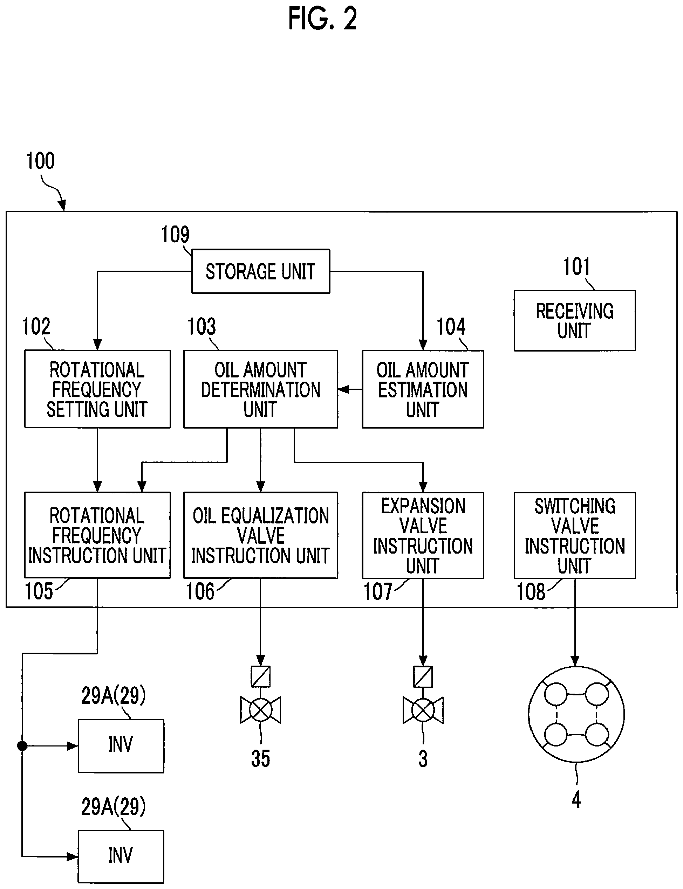

As illustrated in Fig. 2, the control device 100 has a receiving unit 101, a rotational frequency setting unit 102, an oil amount estimation unit 104, an oil amount determination unit 103, a rotational frequency instruction unit 105, an oil equalization valve instruction unit 106, an expansion valve instruction unit 107, a switching valve instruction unit 108, and a storage unit 109 as its functional components. The control device 100 has a computing unit that executes various kinds of computation, a main storage unit, such as a memory that temporarily stores various programs, various kinds of data, and the like, an auxiliary storage unit such as a hard disk drive device that stores various programs, various kinds of data, and the like, and an interface circuit that outputs and performs input of data and the like with the outside, as its hardware components. The receiving unit 101, the rotational frequency instruction unit 105, the oil equalization valve instruction unit 106, the expansion valve instruction unit 107, and the switching valve instruction unit 108 are all configured to have computing units that execute programs stored in the interface circuit, the main storage unit, and the main storage unit. The rotational frequency setting unit 102, the oil amount estimation unit 104, and the oil amount determination unit 103 are each configured to have a main storage unit and a computing unit that executes a program stored in the main storage unit. The storage unit 109 is configured to a main storage unit and an auxiliary storage unit.

The receiving unit 101 receives various kinds of information, instructions, and the like. The receiving unit 101 receives the temperature detected by the low-pressure-side thermometer 37A, the temperature detected by the high-pressure-side thermometer 37C, the pressure detected by the low-pressure-side pressure gauge 38A, and the pressure detected by the high-pressure-side pressure gauge 38C. The rotational frequency setting unit 102 sets the rotational frequency for the motor 23 of each of the two compressors 21A and 21C. The oil amount estimation unit 104 estimates the amount of the oil reserved in the oil reservoir 27 of each of the two compressors 21A and 21C. The oil amount determination unit 103 determines whether or not the amount of the oil reserved in the oil reservoir 27 of each of the two compressors 21A and 21C has reached the upper limit value or the lower limit value. The rotational frequency instruction unit 105 instructs the corresponding rotational frequency changers 29A and 29C on the rotational frequencies of the two compressors 21A and 21C. The oil equalization valve instruction unit 106 instructs the oil equalization valve 35 on the opening and closing of the valve. The expansion valve instruction unit 107 instructs the expansion valve 3 on the valve opening degree of the valve. The switching valve instruction unit 108 instructs the four-way switching valve 4 on the first connection form or the second connection form as a connection form between the ports.

Information required to set the rotational frequency of the motor 23 of each of the two compressors 21A and 21C with the rotational frequency setting unit 102 is stored in the storage unit 109. The information stored in the storage unit 109 is relationship information among an initial oil amount Lls or Lhs of the oil reservoir 27 in each of the compressors 21A and 21C and an oil amount Llr or Lhr after oil return operation, rotational frequency N of each of the compressors 21A and 21C, and an outflow oil amount FO of the oil O per unit time.

The initial oil amount Lhs or Lls is the amount of the oil reserved in the oil reservoir 27 at the time of product forwarding, or an oil amount immediately after the oil O is supplied from the outside. Additionally, the oil amount Lhr or Llr after the oil return operation is the amount of the oil reserved in the oil reservoir 27 immediately after an oil return step to be described below.

The relationship information among the rotational frequency N of each of the compressors 21A and 21C and the outflow oil amount FO of the oil O from each of the compressors 21A and 21C per unit time will be described.

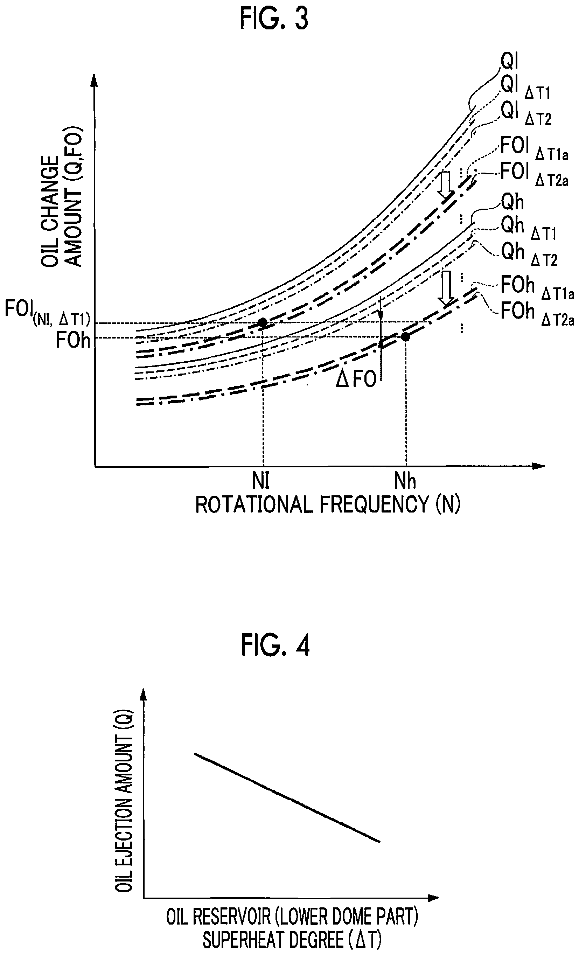

As illustrated in Fig. 3, the amount Q of the oil O per unit time from the ejection port 26 of each of the compressors 21A and 21C, that is, an ejection oil amount per unit time increases with an increase in the rotational frequency N of each of the compressors 21A and 21C. In addition, in Fig. 3, Ql represents an ejection oil amount per unit time of the low-pressure stage compressor 21A, and Qh represents an ejection oil amount per unit time of the high-pressure stage compressor 21C.

Additionally, as illustrated in Fig. 4, the ejection oil amount Q decreases with an increase in a superheat degree $\Delta T$ of the oil reservoir 27 (lower dome part). Thus, in the present embodiment, as illustrated in Fig. 3, the ejection oil amount Q according to the rotational frequency N is corrected in accordance with the superheat degree $\Delta T$ of the oil reservoir 27, and this is defined as an ejection oil amount $Q_{\Delta T}$ after correction. In addition, in Fig. 3, $Ql_{\Delta T1}$ represents an ejection oil amount per unit time of the low-pressure stage compressor 21A at the time of a superheat degree $\Delta T1$, and $Ql_{\Delta T2}$ represents an ejection oil amount per unit time of the low-pressure stage compressor 21A at the time of a superheat degree $\Delta T2$. Additionally, $Qh_{\Delta T1}$ represents an ejection oil amount per unit time of the high-pressure stage compressor 21C at the time of the superheat degree $\Delta T1$, and $Qh_{\Delta T1}$ represents an ejection oil amount per unit time of the high-pressure stage compressor 21C at the time of the superheat degree $\Delta T2$.

Here, the superheat degree $\Delta T$ of the oil reservoir 27 is the temperature distribution of a temperature Td of the oil reservoir 27 with respect to compressor suction saturated temperature (CSST), as shown in the following Equation (1).

$$\Delta T = Td - CSST \qquad (1)$$

In the present embodiment, the oil separator 32A or 32C is provided on the ejection side of each of the compressors 21A and 21C. A portion of the oil O ejected from the compressor 21 is trapped by the oil separator 32. The oil O trapped by the oil separator 32 returns from the suction port 25 of the compressor 21 to the oil reservoir 27 of the compressor 21 via the oil return line 33. For this reason, the outflow oil amount FO per unit time from a system including the compressor 21 and the oil separator 32 is the amount of the oil O, which is not trapped by the oil separator 32, in the oil O ejected from the ejection port 26 of the compressor 21. Thus, in the present embodiment, as shown in the following Equation (2), the ejection oil amount $Q_{\Delta T}$ is corrected at an oil separation efficiency a of an oil separator (< 1), and this is defined as the outflow oil amount FO per unit time. In addition, in Fig. 3, $FOl_{\Delta T1a}$ represents an outflow oil amount per unit time of the low-pressure stage compressor 21A at the time of the superheat degree $\Delta T1$, and $FOl_{\Delta T2a}$ represents an outflow oil amount per unit time of the low-pressure stage compressor 21A at the time of the superheat degree $\Delta T2$. Additionally, $FOh_{\Delta T1a}$ represents an outflow oil amount per unit time of the high-pressure stage compressor 21C at the time of the superheat degree $\Delta T1$, and $FOh_{\Delta T2a}$ represents an outflow oil amount per unit time of the high-pressure stage compressor 21C at the time of the superheat degree $\Delta T2$.

$$FO = Q_{\Delta T} \times (1 - a) \qquad (2)$$

In the present embodiment, the relationship information of each set of the plurality of compressors 21A and 21C are the outflow oil amounts $FOl_{\Delta T1a}$, $FOl_{\Delta T2a}$, ..., $FOh_{\Delta T1a}$, $FOh_{\Delta T2a}$, and ... according to the rotational frequency N, the superheat degree $\Delta T$, and the oil separation efficiency a. That is, in the present embodiment, as shown in the following Equation (3) in each set of the plurality of compressor 21A and 21C, the relationship information among the outflow oil amount FO per unit time, the rotational frequency N of the compressor 21, the superheat degree $\Delta T$ of the oil reservoir 27, and the oil separation efficiency a of the oil separator 32 are stored in the storage unit 109.

$$FO = g(N, \Delta T, a) \qquad (3)$$

The oil separation efficiency a of the oil separator 32 among a plurality of parameters constituting the relationship information is a fixed value. Therefore, the outflow oil amount FO per unit time, the rotational frequency N of a compressor and the superheat degree $\Delta T$ of the oil reservoir 27 among the plurality of parameters constituting the relationship information are treated as variables.

The relationship information $FOl_{\Delta T1a}$, $FOl_{\Delta T2a}$, ..., $FOh_{\Delta T1a}$, $FOh_{\Delta T2a}$, and ... described above is stored in a map form or function form in the storage unit 109.

As described above, the control device 100, which is a constituent element of the refrigeration cycle, controls the individual devices of the multistage compression device 20. Therefore, the control device 100 is also a constituent element of the multistage compression device 20.

Next, the operation of a refrigeration cycle will be described.

First, the basic operation of the refrigeration cycle when the four-way switching valve 4 has the first connection form will be described. In addition, as mentioned above, the first connection form is the form in which the first port 4a and the second port 4b are connected to each other and the third port 4c and the fourth port 4d are connected to each other.

As illustrated in Fig. 1, the gaseous refrigerant R compressed in each of the compressors 21A and 21C of the multistage compression device 20 flows into the first heat exchanger 1 through the first port 4a and the second port 4b of the four-way switching valve 4, and the first line 11. The gaseous refrigerant R exchanges heat with the first medium M1 in the first heat exchanger 1. As a result, the first medium M1 is heated. Meanwhile, the gaseous refrigerant R is cooled and condensed, and turned into a liquid refrigerant R. Therefore, the first heat exchanger 1 functions as a condenser when the four-way switching valve 4 has the first connection form.

The refrigerant R liquefied by the first heat exchanger 1 flows into the second heat exchanger 2 through the second line 12. The refrigerant R is decompressed by the expansion valve 3 arranged in the second line 12 in the process of flowing through the second line 12.

The liquid refrigerant R exchanges heat with the second medium M2 in the second heat exchanger 2. As a result, the second medium M2 is cooled. Meanwhile, the liquid refrigerant R is heated and gasified, and turned into a gaseous refrigerant R. Therefore, the second heat exchanger 2 functions as an evaporator when the four-way switching valve 4 has the first connection form.

The refrigerant R gasified by the second heat exchanger 2 flows into the first suction line 16 of the multistage compression device 20 through the third line 13, and the fourth port 4d and the third port 4c of the four-way switching valve 4. The gaseous refrigerant R flows into the accumulator 31 through the first suction line 16. There is a case where a mist-like liquid refrigerant R slightly remains in the gaseous refrigerant R. In the accumulator 31, the liquid refrigerant R is separated out of the gaseous refrigerant R, and the gaseous refrigerant R is ejected.

The gaseous refrigerant R from the accumulator 31 flows into the low-pressure stage compressor 21A from the suction port 25 of the low-pressure stage compressor 21A through the second suction line 17. The refrigerant R, which has flowed into the low-pressure stage compressor 21A, is compressed by the compression part 22 of the low-pressure stage compressor 21A, and then ejected from the ejection port 26 of the low-pressure stage compressor. In this case, a portion of the oil O within the low-pressure stage compressor 21A is also ejected from the ejection port 26.

The refrigerant R and the oil O ejected from the low-pressure stage compressor 21A flows into the high-pressure stage compressor 21C from the suction port 25 of the high-pressure stage compressor 21C through the low-pressure ejection line 18. A portion of the oil O is trapped by the low-pressure oil separator 32A provided in the low-pressure ejection line 18 in the process of flowing through the low-pressure ejection line 18. The oil O trapped by the low-pressure oil separator 32A returns into the low-pressure stage compressor 21A through the low-pressure oil return line 33A and the second suction line 17.

The refrigerant R, which has flowed into the high-pressure stage compressor 21C, is compressed by the compression part 22 of the high-pressure stage compressor 21C. Meanwhile, a portion of the oil O, which has flowed into the high-pressure stage compressor 21C, is reserved in the oil reservoir 27 of the high-pressure stage compressor 21C. The refrigerant R compressed by the compression part 22 is ejected from the ejection port 26 of the high-pressure stage compressor 21C. In this case, a portion of the oil O within the high-pressure stage compressor 21C is also ejected from the ejection port 26.

The refrigerant R and the oil O ejected from the high-pressure stage compressor 21C flow into the first heat exchanger 1 through the high-pressure ejection line 19, the first port 4a and the second port 4b of the four-way switching valve 4, and the first line 11. A portion of the oil O is trapped by the high-pressure oil separator 32C provided in the high-pressure ejection line 19 in the process of flowing through the high-pressure ejection line 19. The oil O trapped by the high-pressure oil separator 32C returns into the high-pressure stage compressor 21C through the high-pressure oil return line 33C and the low-pressure ejection line 18.

As described above, the refrigeration cycle of the present embodiment moves the heat of the second medium M2 to the first medium M1 via the refrigerant R when the four-way switching valve 4 has the first connection form.

Next, the basic operation of the refrigeration cycle when the four-way switching valve 4 has the second connection form will be described. In addition, as mentioned above, the second connection form is the form in which the second port 4b and the third port 4c are connected to each other and the fourth port 4d and the first port 4a are connected to each other.

The gaseous refrigerant R compressed in each compressor of the multistage compression device 20 flows into the second heat exchanger 2 through the first port 4a and the fourth port 4d of the four-way switching valve 4, and the third line 13. The gaseous refrigerant R exchanges heat with the second medium M2 in the second heat exchanger 2.

As a result, the second medium M2 is heated. Meanwhile, the gaseous refrigerant R is cooled and condensed, and turned into a liquid refrigerant R. Therefore, the second heat exchanger 2 functions as a condenser when the four-way switching valve 4 has the second connection form.

The refrigerant R liquefied by the second heat exchanger 2 flows into the first heat exchanger 1 through the second line 12. The refrigerant R is decompressed by the expansion valve 3 arranged in the second line 12 in the process of flowing through the second line 12.

The liquid refrigerant R exchanges heat with the first medium M1 in the first heat exchanger 1. As a result, the first medium M1 is cooled. Meanwhile, the liquid refrigerant R is heated and gasified, and turned into a gaseous refrigerant R. Therefore, the first heat exchanger 1 functions as an evaporator when the four-way switching valve 4 has the second connection form.

The refrigerant R gasified by the first heat exchanger 1 flows into the first suction line 16 of the multistage compression device 20 through the first line 11, and the second port 4b and the third port 4c of the four-way switching valve 4. The refrigerant R, which has flowed into the first suction line 16, is compressed by the multistage compression device 20, similarly to when the four-way switching valve 4 has the first connection form.

As described above, the refrigeration cycle of the present embodiment moves the heat of the first medium M1 to the second medium M2 via the refrigerant R when the four-way switching valve 4 has the second connection form.

In the present embodiment, the four-way switching valve 4 has the first connection form or the second connection form by the receiving unit 101 receiving an instruction to cool or heat the first medium M1.

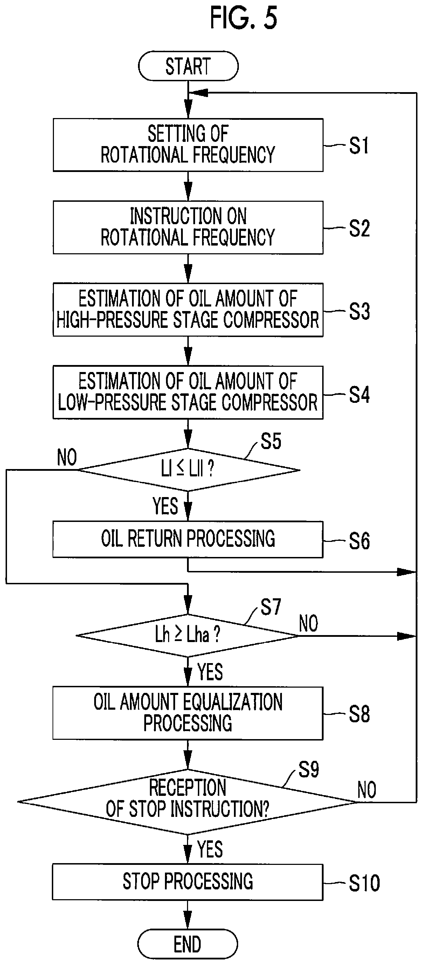

Next, detailed operation of the multistage compression device 20 will be described with reference to a flowchart illustrated in Fig. 5.

If the receiving unit 101 of the control device 100 receives a start instruction, the individual devices of the multistage compression device 20 starts to operate. This start instruction includes an instruction on the target temperature or the like of a first refrigerant R, in addition to the instruction to cool or heating the first medium M1.

If the receiving unit 101 receives the start instruction, the rotational frequency setting unit 102 determines the rotational frequency of the low-pressure stage compressor 21A and the rotational frequency of the high-pressure stage compressor 21C in accordance to the target temperature or the like of the first refrigerant R, the superheat degree $\Delta T$ or the like of the compressor 21 that is included in this start instruction (S1: rotational frequency setting step)).

In this rotational frequency setting step (S1), the rotational frequency setting unit 102 determines the rotational frequency of each of the compressors 21A and 21C according to the target temperature or the like of the first refrigerant R. Next, the rotational frequency setting unit 102 resets the rotational frequency of each of the compressor 21A and 21C determined in accordance with the target temperature or the like of the first refrigerant R such that an outflow oil amount FOh from the high-pressure stage compressor 21C becomes smaller than an outflow oil amount FOl from the low-pressure stage compressor 21A, using the information stored in the storage unit 109.

The rotational frequency setting unit 102 first finds the superheat degree $\Delta T$ of the oil reservoir 27 of each of the compressors 21A and 21C. The rotational frequency setting unit 102 acquires the temperature detected by the low-pressure-side thermometer 37A, the temperature detected by the high-pressure-side thermometer 37C, the pressure detected by the low-pressure-side pressure gauge 38A, and the pressure detected by the high-pressure-side pressure gauge 38C via the receiving unit 101 in order to find the superheat degree $\Delta T$.

As described using Equation (1), the superheat degree $\Delta T$ is the temperature distribution of the temperature Td of the oil reservoir 27 with respect to the compressor suction saturated temperature (CSST). Thus, the rotational frequency setting unit 102 finds the CSST in each of the compressors 21A and 21C. The CSST is uniformly determined depending on the pressure of a fluid suctioned by the compressor 21. For this reason, the rotational frequency setting unit 102 finds the CSST of the low-pressure stage compressor 21A using the pressure of the refrigerant R, suctioned by the low-pressure stage compressor 21A, detected by the low-pressure-side pressure gauge 38A. Moreover, the CSST of the high-pressure stage compressor 21C is found using the pressure of the refrigerant R, suctioned by the high-pressure stage compressor 21C, detected by the high-pressure-side pressure gauge 38C. The rotational frequency setting unit 102 subsequently subtracts the CSST of the low-pressure stage compressor 21A from the temperature of the oil reservoir 27 in the low-pressure stage compressor 21A, which is detected by the low-pressure-side thermometer 37A, and finds the superheat degree $\Delta T$ of the reservoir of the low-pressure stage compressor 21A. Moreover, the CSST of the high-pressure stage compressor 21C is subtracted from the temperature of the oil reservoir 27 in the high-pressure stage compressor 21C, which is detected by the high-pressure-side thermometer 37C, and the superheat degree $\Delta T$ of the reservoir in the high-pressure stage compressor 21C is found.

Therefore, a superheat degree acquiring unit in the present embodiment is constituted of the low-pressure-side thermometer 37A, the high-pressure - side thermometer 37C, the low-pressure-side pressure gauge 38A, the high-pressure-side pressure gauge 38C, and one function of the rotational frequency setting unit 102 that finds a superheat degree on the basis of values measured by these measuring instruments.

The rotational frequency setting unit 102 finds the rotational frequency N of the low-pressure stage compressor 21A and the outflow oil amount FOl corresponding to the superheat degree $\Delta T$, using the relationship information of the low-pressure stage compressor 21A stored in the storage unit 109 if the superheat degree $\Delta T$ of the oil reservoir 27 in each of the compressors 21A and 21C. Specifically, for example, as illustrated in Fig. 3, in a case where the rotational frequency of the low-pressure stage compressor 21A is Nl and the superheat degree of the low-pressure stage compressor 21A is $\Delta T1$, the outflow oil amount $FOl_{(Nl, \Delta T1)}$ corresponding to the rotational frequency Nl and the superheat degree $\Delta T1$ of the low-pressure stage compressor 21A is found using the relationship information $FOl_{\Delta T1a}$ when the low-pressure stage compressor 21A is the superheat degree $\Delta T1$.

Next, the rotational frequency setting unit 102 determines the rotational frequency N of the high-pressure stage compressor 21C at which the outflow oil amount FOh of the high-pressure stage compressor 21C becomes smaller than the outflow oil amount FOl of the low-pressure stage compressor 21A, using the relationship information of the high-pressure stage compressor 21C stored in the storage unit 109. Specifically, for example, as illustrated in Fig. 3, in a case where the outflow oil amount of the low-pressure stage compressor 21A is $FOl_{(Nl, \Delta T1)}$ and the superheat degree of the high-pressure stage compressor 21C is $\Delta T2$, the rotational frequency setting unit 102 first determines the outflow oil amount FOh of the high-pressure stage compressor 21C that is lower by a predetermined amount $\Delta FO$ than the outflow oil amount $FOl_{(Nl, \Delta T1)}$ of the low-pressure stage compressor 21A. Subsequently, a rotational frequency Nh of the high-pressure stage compressor 21C when the outflow oil amount of the high-pressure stage compressor 21C is FOh is determined using the relationship information $FOl_{\Delta T2a}$ when the superheat degree of the high-pressure stage compressor 21C is $\Delta T2$.

From the above, the rotational frequency N of each of the compressors 21A and 21C at which the outflow oil amount FOh from the high-pressure stage compressor 21C becomes smaller than the outflow oil amount FOl from the low-pressure stage compressor 21A is determined. In addition, here, the rotational frequency Nh of the high-pressure stage compressor 21C is determined on the basis of the rotational frequency Nl of the low-pressure stage compressor 21A. However, the rotational frequency Nl of the low-pressure stage compressor 21A may be determined on the basis of the rotational frequency Nh of the high-pressure stage compressor 21C.

If the rotational frequency setting unit 102 determines the rotational frequency N of each of the compressors 21A and 21C, the rotational frequency instruction unit 105 instructs the rotational frequency changers 29A and 29C of the individual compressors 21A and 21C on the rotational frequencies Nl and Nh determined by the rotational frequency setting unit 102 (S2: rotational frequency instruction step).

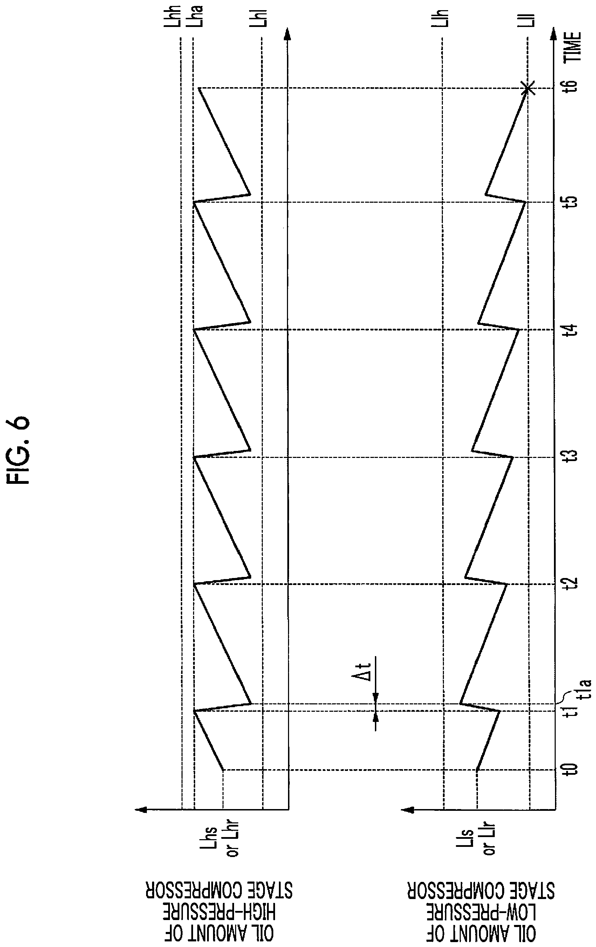

Each rotational frequency changer 29 changes the rotational frequency of the motor 23 of the compressor 21 to the instructed rotational frequency N if the instruction for the rotational frequency N is received from the control device 100. The rotational frequencies Nl and Nh of the individual compressors 21A and 21C determined by the rotational frequency setting unit 102 are rotational frequencies at which the outflow oil amount FOh from the high-pressure stage compressor 21C becomes smaller than the outflow oil amount FOl from the low-pressure stage compressor 21A. For this reason, as illustrated in Fig. 6, the oil amount of the oil reservoir 27 in the low-pressure stage compressor 21A basically decreases with the lapse of time, and conversely, the oil amount of the oil reservoir 27 in the high-pressure stage compressor 21C increases with the lapse of time.

Next, the oil amount estimation unit 104 estimates the oil amount of the oil reservoir 27 in the high-pressure stage compressor 21C (S3: oil amount estimation step of a high-pressure stage compressor). The oil amount of the oil reservoir 27 in the high-pressure stage compressor 21C increases with the lapse of time as mentioned above. As shown in the following Equation (4), an increased amount $\Delta L$ per unit time of this oil amount is a value obtained by subtracting the outflow oil amount FOh per unit time of the high-pressure stage compressor 21C from the outflow oil amount FOl per unit time of the low-pressure stage compressor 21A.

$$\Delta L = FOl - FOh \qquad (4)$$

Thus, the oil amount estimation unit 104 finds the outflow oil amount FOl per unit time of the low-pressure stage compressor 21A, using the temperature detected by the low-pressure-side thermometer 37A, the pressure detected by the low-pressure-side pressure gauge 38A, the rotational frequency of the low-pressure stage compressor 21A, and the relationship information of the low-pressure stage compressor 21A. Moreover, the oil amount estimation unit 104 finds the outflow oil amount FOh per unit time of the high-pressure stage compressor 21C, using the temperature detected by the high-pressure-side thermometer 37C, the pressure detected by the high-pressure-side pressure gauge 38C, the rotational frequency of the high-pressure stage compressor 21C, and the relationship information of the high-pressure stage compressor 21C. Then, the outflow oil amount FOh per unit time of the high-pressure stage compressor 21C is subtracted from the outflow oil amount FOl per unit time of the low-pressure stage compressor 21A, and the increased amount $\Delta L$ of the oil amount per unit time in the high-pressure stage compressor 21C is found.

Subsequently, the oil amount estimation unit 104 integrates the increased amount $\Delta L$ of the oil amount per unit time from the increase start time of the oil amount of the oil reservoir 27 in the high-pressure stage compressor 21C to the present time, and finds an increased amount $\Sigma\Delta L$ of the oil amount from the increase start time of the oil amount of the oil reservoir 27 in the high-pressure stage compressor 21C to the present time. Then, the oil amount estimation unit 104 adds the increased amount $\Sigma\Delta L$ to the oil amount at the increase start time of the oil amount, and estimates an oil amount $L_h(t)$ of the oil reservoir 27 in the high-pressure stage compressor 21C at the present time. In addition, the oil amount at the increase start time of the oil amount is the aforementioned initial oil amount Lhs, the oil amount Lhr immediately after the completion of the oil return operation to be described below, the oil amount immediately after the oil equalization operation, or the like.

Next, the oil amount estimation unit 104 estimates the oil amount of the oil reservoir 27 in the low-pressure stage compressor 21A (S4: oil amount estimation step of a low-pressure stage compressor). A method of estimating the oil amount of the oil reservoir 27 in the high-pressure stage compressor 21C will be described below.

If the oil amount estimation unit 104 estimates the oil amount of the oil reservoir 27 in the low-pressure stage compressor 21A, the oil amount determination unit 103 determines whether the predetermined oil amount Ll of the low-pressure stage compressor 21A becomes equal to or smaller than the lower limit value Lll (S5: lower limit value determining step of a low-pressure stage compressor). If the oil amount determination unit 103 determines that the oil amount Ll of the low-pressure stage compressor 21A becomes equal to or smaller than the lower limit value Lll, an oil return processing step (S6) of notifying the rotational frequency instruction unit 105 and the expansion valve instruction unit 107 of the event, and returning the oil O diffused into the circulation line 10 into the low-pressure stage compressor 21A is executed. On the other hand, if the oil amount determination unit 103 determines that the oil amounts Ll of the low-pressure stage compressors 21A are not equal to or smaller than the lower limit value Lll, whether or not the oil amount Lh of the high-pressure stage compressor 21C becomes the upper limit value Lha determined in advance is determined (S7: upper limit value determining step of a high-pressure stage compressor).

If the oil amount Lh of the high-pressure stage compressor 21C is not the upper limit value Lha, the process returns to the rotational frequency setting step (S1). On the other hand, if the oil amount Lh of the high-pressure stage compressor 21C is the upper limit value Lha, the oil amount determination unit 103 notifies the oil equalization valve instruction unit 106 of the event. If the oil equalization valve instruction unit 106 receives this notification from the oil amount determination unit 103, the oil equalization valve instruction unit 106 instructs the oil equalization valve 35 to be opened by a predetermined time (S8: oil amount equalization processing step). The oil equalization valve 35 is opened for the predetermined time as receiving this instruction, and is closed after that.

The pressure within the housing 24 of the high-pressure stage compressor 21C is higher than the pressure within the housing 24 of the low-pressure stage compressor 21A. For this reason, if the oil equalization valve 35 is opened, the oil O reserved in the oil reservoir 27 of the high-pressure stage compressor 21C starts to flow into the oil reservoir 27 of the low-pressure stage compressor 21A via the oil equalization line 34 and the oil equalization valve 35. As a result, as illustrated in Fig. 6, the oil amount within the high-pressure stage compressor 21C decreases gradually from an opening time t1 of the oil equalization valve 35, while the oil amount within the low-pressure stage compressor 21A increases gradually.

The inflow rate of the oil O per unit time into the low-pressure stage compressor 21A is determined depending on a pressure difference between the pressure within the housing 24 of the high-pressure stage compressor 21C and the pressure within the housing 24 of the low-pressure stage compressor 21A, and the flow path resistances of the oil equalization line 34 and the oil equalization valve 35. The flow path resistances of the oil equalization line 34 and the oil equalization valve 35 are fixed values. The pressure difference between the pressure within the housing 24 of the high-pressure stage compressor 21C and the pressure within the housing 24 of the low-pressure stage compressor 21A is also substantially constant. Thus, in the present embodiment, assuming that the inflow rate of the oil O per unit time, which is determined in accordance with the pressure difference and the flow path resistances, is constant, the time until the oil amount that actually flows into the low-pressure stage compressor 21A reaches a target oil amount is determined, the oil equalization valve 35 is opened for this time $\Delta t$. That is, as illustrated in Fig. 6, assuming that the oil equalization valve 35 is opened at the time t1, the oil equalization valve 35 is closed if a time t1a after $\Delta t$ time from this time t1 is reached. In addition, the pressure within the housing 24 of the high-pressure stage compressor 21C and the pressure within the housing 24 of the low-pressure stage compressor 21A may be detected by pressure gauges, respectively, and the time for which the oil equalization valve 35 is opened may be determined in accordance with the pressure difference.

As a result, the oil amount of the high-pressure stage compressor 21C decreases from the upper limit value Lha, and, for example, becomes an oil amount smaller than the initial oil amount Lhs of the high-pressure stage compressor 21C and larger than the lower limit value Lhl of the oil amount of the high-pressure stage compressor 21C. In addition, the upper limit value Lha herein is a value smaller than an upper limit value Lhh determined from a viewpoint of the operation of the high-pressure stage compressor 21C, and is an upper limit value used as a threshold value for feeding the oil O within the high-pressure stage compressor 21C into the low-pressure stage compressor 21A. On the other hand, the oil amount of the low-pressure stage compressor 21A, for example, increases from an oil amount smaller than the initial oil amount Lls of the low-pressure stage compressor 21A, and for example, and become an oil amount larger than the initial oil amount Lls of the low-pressure stage compressor 21A and smaller than the upper limit value Llh of the oil amount of the low-pressure stage compressor 21A.

Thereafter, if the receiving unit 101 receives an operation stop instruction (S9), the receiving unit 101 notifies the oil equalization valve instruction unit 106 and the rotational frequency instruction unit 105 of the event, and makes these units execute stop processing (S10: stop processing). If this notification is received, the oil equalization valve instruction unit 106 instructs the oil equalization valve 35 to be opened for the predetermined time Δt. As a result, the oil equalization valves 35 are temporarily opened. Thereafter, the rotational frequency instruction unit 105 instructs the rotational frequency changers 29A and 29C of the individual compressors 21A and 21C on the rotational frequency 0, that is, stop. As a result, the individual compressors 21A and 21C are stopped.

On the other hand, if the receiving unit 101 does not receive the operation stop instruction (S9), the process returns to the rotational frequency setting step (S1). Then, Steps S1 to S5 and S7 to S9 that have been described above will be repeatedly executed. In this process, within the high-pressure stage compressor 21C, as illustrated in Fig. 6, an increase in oil amount, and a decrease in oil amount resulting from the execution of an oil amount equalization step (S8) are repeated. Additionally within the low-pressure stage compressor 21A, a decrease in oil amount, and an increase in oil amount resulting from the execution of the oil amount equalization step (S8) are repeated.

Meanwhile, the oil amount of the high-pressure stage compressor 21C returns to the upper limit value Lha of the high-pressure stage compressor 21C even if the oil amount equalization step (S8) is repeatedly executed. On the other hand, regarding the low-pressure stage compressor 21A, the oil amount immediately after the execution of the oil amount equalization step (S8) decreases whenever the oil amount equalization step is executed (S8). This is because the oil O is diffused by the outflow oil amount FOh from the high-pressure stage compressor 21C into the remaining line in the circulation line 10 from the inside of a line system of the multistage compression device 20. For this reason, even the oil amount of the low-pressure stage compressor 21A is increased in the oil amount equalization step (S8), the oil amount of the low-pressure stage compressor 21A reaches the lower limit value Lll after a plurality of times of execution of the oil amount equalization step (S8).

Thus, in the present embodiment, the oil amount estimation step (S4) of the low-pressure stage compressor 21A and the lower limit value determining step (S5) of the low-pressure stage compressor 21A among Steps S1 to S5 and S7 to S9 that have been described are executed. Also, in the present embodiment, if the oil amount of the low-pressure stage compressor 21A becomes equal to or smaller than the lower limit value Lll in the lower limit value determining step (S5) of the low-pressure stage compressor 21A, the oil return processing step (S6) is executed.

The oil amount per unit time, which is diffused into the remaining line in the circulation line 10 from the inside of the line system of the multistage compression device 20, is the outflow oil amount FOh per unit time from the high-pressure stage compressor 21C as mentioned above. For this reason, as shown in the following Equation (5), a total oil amount $L_{total}(t)$ obtained by summing up the oil amount of the low-pressure stage compressor 21A and the oil amount of the high-pressure stage compressor 21C at the present time is a value, which is obtained by subtracting the value $\Sigma$FOh obtained by integrating the outflow oil amount FOh per unit time from the high-pressure stage compressor 21C for the time from the oil return operation to the present time, from a total oil amount by summing up the oil amount Llr of the low-pressure stage compressor 21A and the oil amount Lhr of the high-pressure stage compressor 21C immediately after the oil return operation performed recently.

$$L_{total}(t) = (Llr + Lhr) - \Sigma FOh \qquad (5)$$

Additionally, as shown in the following Equation (6), the oil amount $L_l(t)$ of the low-pressure stage compressor 21A at the present time is a value obtained by subtracting the oil amount $L_h(t)$ of the high-pressure stage compressor 21C at the present time from the total oil amount $L_{total}(t)$ at the present time.

$$L_l(t) = L_{total}(t) - L_h(t) \qquad (6)$$

Thus, the oil amount estimation unit 104 executes computation of the above Equations (5) and (6), and finds the oil amount $L_l(t)$ of the low-pressure stage compressor 21A at the present time (S4: oil amount estimation step of the low-pressure stage compressor 21A). Here, the oil amount estimation unit 104 acquires the oil amount Llr of the low-pressure stage compressor 21A and the oil amount Lhr of the high-pressure stage compressor 21C immediately after the oil return operation in Equation (5), from the storage unit 109. Additionally, the oil amount estimation unit 104 uses the outflow oil amount FOh found in the process of estimating the oil amount $L_h(t)$ of the high-pressure stage compressor 21C at the present time in the oil amount estimation step (S3) of the high-pressure stage compressor 21C, as the outflow oil amount FOh per unit time of the high-pressure stage compressor 21C in Equation (5). Moreover, the oil amount estimation unit 104 uses the oil amount $L_h(t)$ of the high-pressure stage compressor 21C at the present time, which has been found in the oil amount estimation step (S3) of the high-pressure stage compressor 21C, as oil amount $L_h(t)$ of the high-pressure stage compressor 21C at the present time in Equation (6) . In addition, in the present embodiment, the oil amount estimation unit 104 acquires the oil amount within the uppermost stream compressor 21A, an uppermost stream oil amount acquiring unit is constituted of the oil amount estimation unit 104.

If the oil amount estimation unit 104 estimates the oil amount of the oil reservoir 27 in the low-pressure stage compressor 21A, as mentioned above the oil amount determination unit 103 determines whether the predetermined oil amount Ll of the low-pressure stage compressor 21A becomes equal to or smaller than the predetermined lower limit value Lll (S5: lower limit value determining step of a low-pressure stage compressor). If the oil amount determination unit 103 determines that the oil amounts Ll of the low-pressure stage compressors 21A are not equal to or smaller than the lower limit value Lll, as mentioned above, the upper limit value determining step (S7) of the high-pressure stage compressor 21C is executed. On the other hand, if the oil amount determination unit 103 determines that the oil amount Ll of the low-pressure stage compressor 21A becomes equal to or smaller than the lower limit value Lll, the rotational frequency instruction unit 105 and the expansion valve instruction unit 107 are notified of the event. If the notification is received from the oil amount determination unit 103, the rotational frequency instruction unit 105 instructs the corresponding rotational frequency changers 29A and 29C on predetermined rotational frequencies for the oil return operation with respect to the individual compressors 21A and 21C. As a result, the rotational frequencies of the individual compressors 21A and 21C become the rotational frequencies for the oil return operation. Additionally, if the notification is received from the oil amount determination unit 103, the expansion valve instruction unit 107 instructs the expansion valve 3 on a predetermined valve opening degree for the oil return operation. As a result, the expansion valve 3 becomes the valve opening degree for the oil return operation (S6: oil return processing step). Therefore, in the present embodiment, an oil return operation instruction unit is constituted of the rotational frequency instruction unit 105 and the expansion valve instruction unit 107.

If the oil return processing, in other words, the oil return operation is executed, the oil O diffused into the circulation line 10 returns into the low-pressure stage compressor 21A, and the oil amount of the low-pressure stage compressor 21A becomes an oil amount larger than the lower limit value Lll of the oil amount of the low-pressure stage compressor 21A.

In addition, here, in order to execute the oil return operation, the rotational frequency of each of the compressors 21A and 21C and the valve opening degree of the expansion valve 3 are adjusted. However, there are various well-known methods for the oil return operation.

For this reason, in the oil return processing step (S6), the oil return operation may be executed by other well-known methods.

If the oil return processing step (S6) is completed, the process returns to the rotational frequency setting step (S1).

As described above, in the present embodiment, the individual compressors 21A and 21C are operated such that the outflow oil amount FOh of the downstream high-pressure stage compressor 21C decreases with respect to the outflow oil amount FOl of the upstream low-pressure stage compressor 21A. For this reason, in the present embodiment, the oil amount of the downstream high-pressure stage compressor 21C reaches the lower limit value Lhl before the oil amount of the upstream low-pressure stage compressor 21A reaches the lower limit value Lll. In other words, in the present embodiment, in a case where the oil amount of any of the compressors 21A and 21C reaches the lower limit value, the compressor becomes the upstream low-pressure stage compressor 21A. Additionally, in the oil return operation, the oil O diffused into the circulation line 10 returns into the high-pressure stage compressor 21C before returning into the low-pressure stage compressor 21A. Therefore, in the present embodiment, even if the oil amount of any of the compressors 21A and 21C reaches the lower limit value, the oil amount of the compressor 21A of which the oil amount reaches the lower limit value can be recovered in a short time by the oil return operation.

In the present embodiment, each of the plurality of compressor 21A and 21C is provided with the oil separator 32A or 32C and the oil return line 33A or 33C. For this reason, in the present embodiment, a decrease in the oil amount of each of the compressors 21A and 21C can be suppressed. Moreover, in the present embodiment, the oil separation efficiency of the high-pressure oil separator 32C for the lowermost stream high-pressure stage compressor 21C is higher than the oil separation efficiency of the low-pressure oil separator 32A for the low-pressure stage compressor 21A. For this reason, in the present embodiment, the amount of the oil O that flows out from the system, through which the refrigerant R of the multistage compression device 20 flows, to the outside can be effectively suppressed.

In the present embodiment, the oil reservoir 27 of the high-pressure stage compressor 21C and the oil reservoir 27 of the low-pressure stage compressor 21A are connected to each other by the oil equalization line 34. For this reason, in the present embodiment, the oil O that is reserved within the high-pressure stage compressor 21C can be fed into the low-pressure stage compressor 21A via the oil equalization line 34, and a decrease in oil amount within the low-pressure stage compressor 21A can be suppressed.

In a state where the oil reservoir 27 of the high-pressure stage compressor 21C and the oil reservoir 27 of the low-pressure stage compressor 21A are always communicating with each other by the oil equalization line 34, the pressure within the high-pressure stage compressor 21C always declines, and the compression efficiency in the high-pressure stage compressor 21C always declines. In the present embodiment, the oil equalization line 34 is provided with the oil equalization valve 35. For this reason, in the present embodiment, by opening the oil equalization valve 35 only when the need for feeding the oil O, which is reserved within the high-pressure stage compressor 21C, into the low-pressure stage compressor 21A increases, the oil amount within the low-pressure stage compressor 21A can be recovered, and a decline in the compression efficiency in the high-pressure stage compressor 21C can be made temporary.

In the present embodiment, by executing the oil return operation, the oil O diffused into the circulation line 10 can be returned into the lowermost stream high-pressure stage compressor 21C.

"Various Modification Examples"

Various modification examples of the embodiment described above will be illustrated.

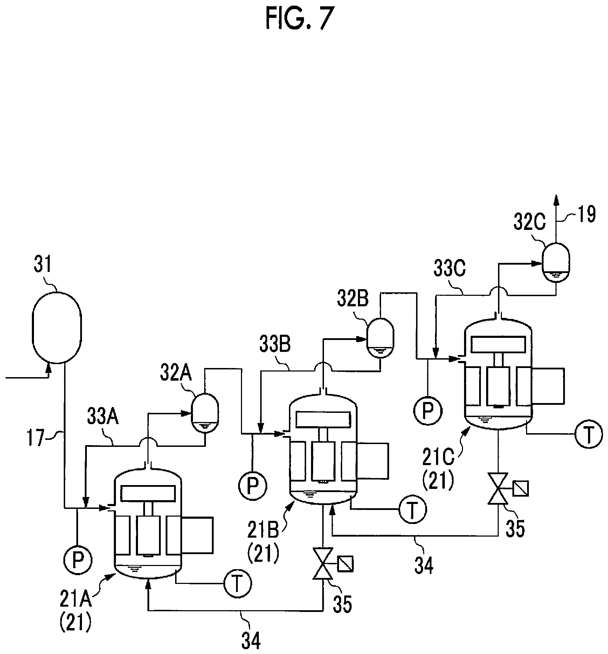

The multistage compression device 20 in the above embodiment is an example in which the two compressors 21A and 21C are arranged in series. However, in the multistage compression device 20, three or more compressors may be arranged in series. For example, as illustrated in Fig. 7, even in a case where the three compressors 21A, 21B, and 21C are arranged in series, the same effects as those of the above embodiment can be obtained by determining the rotational frequencies of respective compressors such that the outflow oil amount of a downstream compressor becomes smaller than the outflow oil amount of an upstream compressor. In this case, the rotational frequency setting unit 102 determines the rotational frequency of the low-pressure stage compressor 21A and the medium-pressure stage compressor 21B such that an outflow oil amount $FL_m$ of the medium-pressure stage compressor 21B arranged downstream of the uppermost stream low-pressure stage compressor 21A decreases with respect to the outflow oil amount $FO_l$ of the uppermost stream low-pressure stage compressor 21A. Moreover, the rotational frequency setting unit 102 determines the rotational frequency of the high-pressure stage compressor 21C such that an outflow oil amount $FL_h$ of the high-pressure stage compressor 21C arranged downstream of the medium-pressure stage compressor 21B decreases with respect to the outflow oil amount $FL_m$ of the medium-pressure stage compressor 21B. In addition, even in this case, after the rotational frequency of the high-pressure stage compressor 21C is determined, the rotational frequency of the medium-pressure stage compressor 21B may be determined, and finally, the rotational frequency of the low-pressure stage compressor 21A may be determined.

Additionally, even in a case where the three or more compressors are arranged in series, it is preferable to provide an oil separator downstream of each compressor and connect each oil separator and a corresponding compressor to each other by an oil return line. Even in this case, it is preferable that the oil separation efficiency of the oil separator for the downstream compressor is made higher than the oil separation efficiency of the oil separator for the downstream compressor. For example, as illustrated in Fig. 7, in a case where the three compressors 21A, 21B, and 21C are arranged in series, the low-pressure oil separator 32A is provided downstream of the low-pressure stage compressor 21A, and the low-pressure oil separator 32A and the low-pressure stage compressor 21A are connected to each other by the low-pressure oil return line 33A. A medium-pressure oil separator 32B is provided downstream of the medium-pressure stage compressor 21B, and the medium-pressure oil separator 32B and the medium-pressure stage compressor 21B are connected to each other by a medium-pressure oil return line 33B. Moreover, the high-pressure oil separator 32C is provided downstream of the high-pressure stage compressor 21C, and the high-pressure oil separator 32C and the high-pressure stage compressor 21C are connected to each other by the high-pressure oil return line 33C. Additionally, also in the example illustrated in Fig. 7, it is preferable that the oil separation efficiency of the downstream medium-pressure oil separator 32B is made higher than the oil separation efficiency of the upstream low-pressure oil separator 32A and the oil separation efficiency of the downstream high-pressure oil separator 32C is made higher than the oil separation efficiency of the medium-pressure oil separator 32B.

In the above embodiment, the oil amount estimation unit 104 is exemplified as the oil amount acquiring unit that acquires the amount of the oil reserved in the compressor 21. However, the oil amount acquiring unit may be a liquidometer or liquid level meter that detects amount of the oil reserved in the compressor 21.

In the above embodiment, the oil equalization line 34 is provided with the oil equalization valve 35. However, the oil equalization valve 35 is not necessarily provided in the oil equalization line 34. However, in a case where the oil equalization valve 35 is not provided, the compression efficiency of the high-pressure stage compressor 21C is always brought into a declining state as mentioned above. For this reason, in a case where the decline in the compression efficiency of the high-pressure stage compressor 21C is suppressed, similarly to the present embodiment, it is preferable to provide the oil equalization valve 35 in the oil equalization line 34.

In the above embodiment, the oil amount estimation step (S3) of the high-pressure stage compressor 21C is executed before the oil amount estimation step (S4) of the low-pressure stage compressor 21A. However, as long as the oil amount estimation step (S3) of the high-pressure stage compressor 21C is performed after a rotational frequency instruction step (S2) and before the upper limit value determining step (S7) of the high-pressure stage compressor 21C, the oil amount estimation step (S3) may be performed at any timing.

The refrigeration cycle in the above embodiment includes the four-way switching valve 4. As mentioned above, the four-way switching valve 4 is provided in order to perform switching between a case where the first heat exchanger 1 is made to function as a condenser and a case where the first heat exchanger 1 is made to function as an evaporator. For this reason, in a case where the first heat exchanger 1 is made to function exclusively as the condenser or in a case where the first heat exchanger 1 is made to function exclusively as the evaporator, the four-way switching valve 4 is unnecessary.

Industrial Applicability

According to the aspect of the invention, the time for recovering the oil amount of a compressor can be shortened.

Reference Signs List

| | |
|---|---|
| 1: | first heat exchanger |
| 2: | second heat exchanger |
| 3: | expansion valve |
| 4: | four-way switching valve |
| 10: | circulation line |
| 11: | first line |
| 12: | second line |
| 13: | third line |
| 15: | compression line |
| 16: | first suction line |
| 17: | second suction line |
| 18: | low-pressure ejection line |
| 19: | high-pressure ejection line |
| 20: | multistage compression device |
| 21: | compressor |
| 21A: | low-pressure stage compressor |
| 21B: | medium-pressure stage compressor |
| 21C: | high-pressure stage compressor |
| 22: | compression part |
| 23: | motor |
| 24: | housing |
| 25: | suction port |
| 26: | ejection port |
| 27: | oil reservoir |
| 29: | rotational frequency changer |
| 29a: | low-pressure-side rotational frequency changer |
| 29c: | high-pressure-side rotational frequency changer |
| 31: | accumulator |
| 32: | oil separator |
| 32A: | low-pressure oil separator |
| 32B: | medium-pressure oil separator |
| 32C: | high-pressure oil separator |
| 33: | oil return line |
| 33A: | low-pressure oil return line |
| 33B: | medium-pressure oil return line |
| 33C: | high-pressure oil return line |
| 34: | oil equalization line |
| 35: | oil equalization valve |
| 37a: | low-pressure-side thermometer |
| 37c: | high-pressure-side thermometer |
| 38a: | low-pressure-side pressure gauge |
| 38c: | high-pressure-side pressure gauge |

**EP 3 392 577 A1**

100: control device
101: receiving unit
102: rotational frequency setting unit
103: oil amount determination unit
104: oil amount estimation unit
105: rotational frequency instruction unit
106: oil equalization valve instruction unit
107: expansion valve instruction unit
108: switching valve instruction unit
109: storage unit

**Claims**

1. A multistage compression device comprising:

   a plurality of compressors arranged in series in a circulation line for a refrigerant;
   a rotational frequency changer that is provided in each of the plurality of compressors and changes a rotational frequency of the compressor; and
   a control device that controls the rotational frequencies of the plurality of compressors,
   wherein each of the plurality of compressors has a compression part that compresses the refrigerant and changes the rotational frequency with the rotational frequency changer, and a housing which covers the compression part and in which oil required for operation of the compression part is reserved,
   wherein a suction port through which the refrigerant is suctioned, an ejection port through which the refrigerant compressed by the compression part is ejected together with the oil, and an oil reservoir in which the oil is reserved are formed in the housing, and
   wherein the control device has
   a storage unit in which a relationship between an operational state of a compressor including the rotational frequency of the compressor and an outflow oil amount per unit time of the oil is stored for each of the plurality of compressors,
   a rotational frequency setting unit that determines the rotational frequency of a compressor for each of the plurality of compressors such that the outflow oil amount of a downstream compressor becomes smaller than the outflow oil amount of an upstream compressor among the plurality of compressors using the relationship for each of the plurality of compressors, and
   a rotational frequency instruction unit that instructs a corresponding rotational frequency changer on the rotational frequency of each of the plurality of compressors set by the rotational frequency setting unit.

2. The multistage compression device according to Claim 1,
   wherein each of the plurality of compressors includes a superheat degree acquiring unit that acquires a superheat degree of the oil reserved in the oil reservoir,
   wherein the outflow oil amount in the relationship is an outflow oil amount corrected in accordance with the superheat degree of the oil, and
   wherein the rotational frequency setting unit determines the rotational frequency according to the superheat degree of each of the plurality of compressors such that the outflow oil amount of a downstream compressor becomes smaller than the outflow oil amount of an upstream compressor among the plurality of compressors, using the relationship for each of the plurality of compressors and the superheat degree acquired by the superheat degree acquiring unit.

3. The multistage compression device according to Claim 1 or 2, further comprising:

   an oil separator that is provided for each of the plurality of compressors and separates the oil from the refrigerant ejected from the compressor before the refrigerant ejected from the compressor flows into other compressors, and
   an oil return line that returns the oil separated by the oil separator into the housing of the compressor corresponding to the oil separator.

4. The multistage compression device according to Claim 3,
   wherein an oil separation efficiency of the oil separator for the downstream compressor is higher than the oil separation

17

efficiency of the oil separator for the upstream compressor among the oil separators for the plurality of compressors, and

wherein the outflow oil amount in the relationship is an outflow oil amount corrected in accordance with the oil separation efficiency of the oil separator.

5. The multistage compression device any one of Claims 1 to 4, further comprising:

an oil equalization line having a first end connected to the oil reservoir for each of all compressors excluding an uppermost stream compressor among the plurality of compressors and having a second end connected to the oil reservoir of a compressor adjacent to an upstream side of the compressor serving as a connection source of the first end.

6. The multistage compression device according to Claim 5, further comprising:

an oil equalization valve that is provided in the oil equalization line and adjusts a flow rate of the oil that flows through the oil equalization line.

7. The multistage compression device according to Claim 6,
wherein the control device has
an oil amount acquiring unit that acquires amounts of the oil reserved in the oil reservoirs for all compressors excluding the uppermost stream compressor, and
an oil equalization valve instruction unit that gives an opening instruction to a target oil equalization valve provided in the oil equalization line that connects the oil reservoir of the target compressor and the oil reservoir of a compressor adjacent to an upstream side of the target compressor to each other if an oil amount in the oil reservoir of a target compressor that is any compressor, among oil amounts of one or more compressors acquired in the oil amount acquiring unit, reaches a predetermined upper limit value.

8. The multistage compression device according to Claim 7,
wherein the oil amount acquiring unit has an oil amount estimation unit that finds an outflow oil amount per unit time of the downstream compressor according to the operational state of the downstream compressor, using the relationship relating to the downstream compressor, out of a pair of the compressors adjacent to each other, finds an outflow oil amount per unit time of the upstream compressor according to the operational state of upstream compressor, using the relationship relating to the upstream compressor, and estimates an amount of the oil reserved within the downstream compressor, on the basis of a value obtained by subtracting the outflow oil amount per unit time of the upstream compressor from the outflow oil amount per unit time of the downstream compressor.

9. The multistage compression device according to Claim 7 or 8,
wherein the oil equalization valve instruction unit gives the opening instruction to the target oil equalization valve for a predetermined time,
wherein the predetermined time is a time until a total oil amount based on an oil amount per unit time of the oil flowing into a compressor adjacent to an upstream side of the target compressor from the inside of the target compressor reaches a predetermined oil amount, and
wherein the oil amount per the unit time is an oil amount that is determined according to a difference between a pressure within a housing of the target compressor and a pressure within a housing of the compressor adjacent to the upstream side of the target compressor.

10. The multistage compression device according to any one of Claims 1 to 9,
wherein the control device has
an uppermost stream oil amount acquiring unit that acquires an amount of the oil reserved within an uppermost stream compressor among a plurality of the compressors, and
an oil return operation instruction unit that instructs any device connected to the circulation line to be a state that the oil in the circulation line is capable of returning into the uppermost stream compressor if an oil amount acquired by the uppermost stream oil amount acquiring unit reaches a predetermined lower limit value.

11. A refrigeration cycle comprising:

the multistage compression device according to any one of Claims 1 to 10;
a first heat exchanger that is arranged in the circulation line and allows heat exchange between the refrigerant flowing through the circulation line and a first medium to change the phase of the refrigerant;
a second heat exchanger that is arranged in the circulation line, allows heat exchange between the refrigerant flowing through the circulation line and a second medium to change the phase of the refrigerant; and
an expansion valve that is arranged at a portion in the circulation line where the multistage compression device is not arranged between the first heat exchanger and the second heat exchanger, in the circulation line between the first heat exchanger and the second heat exchanger.

12. An operation method for a multistage compression device including a plurality of compressors arranged in series in a circulation line for a refrigerant, and a rotational frequency changer that is provided in each of the plurality of compressors and changes a rotational frequency of the compressor,
wherein each of the plurality of compressors has a compression part that compresses the refrigerant and changes the rotational frequency with the rotational frequency changer, and a housing which covers the compression part and in which oil required for driving of the compression part is reserved, and
wherein a suction port through which the refrigerant is suctioned, an ejection port through which the refrigerant compressed by the compression part is ejected together with the oil, and an oil reservoir in which the oil is reserved are formed in the housing, the operation method comprising:

a rotational frequency setting step of determining the rotational frequency of a compressor for each of the plurality of compressors such that an outflow oil amount of a downstream compressor becomes smaller than an outflow oil amount of an upstream compressor among the plurality of compressors, using a predetermined relationship between an operational state of a compressor including the rotational frequency of the compressor and an outflow oil amount per unit time in each of the plurality of compressors, and
a rotational frequency instruction step of instructing a rotational frequency changer corresponding to the compressor on the rotational frequency of each of the plurality of compressors set by the rotational frequency setting step.

13. The operation method for a multistage compression device according to Claim 12, further comprising:

an oil amount acquiring step of acquiring amounts of the oil reserved in the oil reservoirs for all the compressors excluding the uppermost stream compressor among the plurality of compressors; and
an oil equalization amount processing step of sending a portion of the oil within a target compressor into the compressor adjacent to the upstream side of the target compressor if an oil amount within the target compressor, which is any one compressor among oil amounts within the compressors acquired in the oil amount acquiring step, reaches a predetermined upper limit value.

14. The operation method for a multistage compression device according to Claims 12 or 13, further comprising
an uppermost stream oil amount acquiring step of acquiring an amount of the oil reserved within the oil reservoir of the uppermost stream compressor among the plurality of the compressors, and
an oil return processing step of instructing any device connected to the circulation line such that the oil in the circulation line is capable of returning into the uppermost stream compressor if an oil amount acquired in the uppermost stream oil amount acquiring step reaches a predetermined lower limit value.

FIG. 1

# FIG. 2

100

109 STORAGE UNIT

101 RECEIVING UNIT

102 ROTATIONAL FREQUENCY SETTING UNIT

103 OIL AMOUNT DETERMINATION UNIT

104 OIL AMOUNT ESTIMATION UNIT

ROTATIONAL FREQUENCY INSTRUCTION UNIT 105

OIL EQUALIZATION VALVE INSTRUCTION UNIT 106

EXPANSION VALVE INSTRUCTION UNIT 107

SWITCHING VALVE INSTRUCTION UNIT 108

29A(29) INV

29A(29) INV

35

3

4

# FIG. 3

OIL CHANGE AMOUNT (Q,FO)

Ql
Ql $_{ΔT1}$
Ql $_{ΔT2}$
FOl $_{ΔT1a}$
FOl $_{ΔT2a}$
Qh
Qh $_{ΔT1}$
Qh $_{ΔT2}$
FOh $_{ΔT1a}$
FOh $_{ΔT2a}$

FOl $_{(Nl, ΔT1)}$
FOh

ΔFO

Nl          Nh
ROTATIONAL FREQUENCY (N)

# FIG. 4

OIL EJECTION AMOUNT (Q)

OIL RESERVOIR (LOWER DOME PART)
SUPERHEAT DEGREE (ΔT)

# FIG. 5

START

SETTING OF
ROTATIONAL FREQUENCY — S1

INSTRUCTION ON
ROTATIONAL FREQUENCY — S2

ESTIMATION OF OIL AMOUNT OF
HIGH-PRESSURE STAGE COMPRESSOR — S3

ESTIMATION OF OIL AMOUNT OF
LOW-PRESSURE STAGE COMPRESSOR — S4

S5
$Ll \leq Lll$ ?   NO

YES

OIL RETURN PROCESSING — S6

S7
$Lh \geq Lha$ ?   NO

YES

OIL AMOUNT EQUALIZATION
PROCESSING — S8

S9
RECEPTION
OF STOP INSTRUCTION?   NO

YES

STOP PROCESSING — S10

END

FIG. 6

# FIG. 7

## INTERNATIONAL SEARCH REPORT

International application No.

PCT/JP2017/012307

A. CLASSIFICATION OF SUBJECT MATTER
*F25B1/00(2006.01)i, F25B1/10(2006.01)i*

According to International Patent Classification (IPC) or to both national classification and IPC

B. FIELDS SEARCHED

Minimum documentation searched (classification system followed by classification symbols)
F25B1/00, F25B1/10

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-24447 A (Daikin Industries, Ltd.), 04 February 2013 (04.02.2013), paragraphs [0070] to [0083]; fig. 1 to 5 (Family: none) | 1-14 |
| A | JP 2006-214602 A (Matsushita Electric Industrial Co., Ltd.), 17 August 2006 (17.08.2006), paragraphs [0034] to [0042]; fig. 1 to 3 (Family: none) | 1-14 |
| A | JP 11-142002 A (Mitsubishi Electric Corp.), 28 May 1999 (28.05.1999), paragraphs [0015] to [0062]; fig. 1 to 7 (Family: none) | 1-14 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 May 2017 (23.05.17) | 06 June 2017 (06.06.17) |

| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

**INTERNATIONAL SEARCH REPORT**

| International application No. |
| --- |
| PCT/JP2017/012307 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | EP 2088388 A1  (STIEBEL ELTRON GMBH & CO. KG), 12 August 2009 (12.08.2009), paragraphs [0014] to [0020]; fig. 1 (Family: none) | 1-14 |
| A | JP 2003-279175 A  (Mitsubishi Electric Corp.), 02 October 2003 (02.10.2003), paragraphs [0057] to [0058] (Family: none) | 1-14 |
| A | JP 7-35425 A  (Mitsubishi Heavy Industries, Ltd.), 07 February 1995 (07.02.1995), paragraphs [0019] to [0020]; fig. 1 to 4 (Family: none) | 1-14 |

Form PCT/ISA/210 (continuation of second sheet) (January 2015)

**REFERENCES CITED IN THE DESCRIPTION**

**Patent documents cited in the description**

- JP 2016064534 A

- JP 2013024447 A